# EUROPEAN PATENT SPECIFICATION

(11) **EP 3 568 265 B1**
(45) Date of publication and mention of the grant of the patent: **15.09.2021**
(21) Application number: 17891641.7
(22) Date of filing: 10.01.2017
(51) Int. Cl.: B25F 5/00, B23D 51/16, B27B 19/00, B24B 47/16, B24B 23/04, B24B 47/12

(54) **OSCILLATING TOOL WITH MULTIPLE OSCILLATING ANGLES**
OSZILLIERENDES WERKZEUG MIT MEHREREN OSZILLIERENDEN WINKELN
OUTIL OSCILLANT À MULTIPLES ANGLES D'OSCILLATION

(43) Date of publication of application: 20.11.2019
(73) Proprietor: Techtronic Cordless GP, Anderson, SC 29621 (US)
(72) Inventor: CHAN, Wai Tong, Hong Kong (CN); MOK, Kwok Ting, Hong Kong (CN)
(74) Representative: BRP Renaud & Partner mbB Rechtsanwälte Patentanwälte Steuerberater
(86) International application number: PCT/CN2017/070751
(87) International publication number: WO 2018/129656

(56) References cited:
- CN-A- 102 441 873
- CN-A- 103 350 414
- CN-A- 103 465 230
- CN-A- 104 669 217
- CN-A- 104 669 218
- US-A1- 2011 011 605
- US-A1- 2011 209 888
- US-A1- 2015 034 353
- US-A1- 2016 271 711

## Description

### BACKGROUND

The present disclosure relates to power tools driven by an electric motor, and more specifically, the present invention relates to oscillating power tools. Power tools utilize the rotation of an electric motor to provide useful torque for operations such as cutting.

US2015/034353 relates to an oscillating power tool having variable oscillating angles. According to the abstract of this document the power tool includes a housing comprising a head housing and a body housing connected to the head housing, a motor received in the body housing and comprised a driving shaft configured to rotate about a axis of the drive shaft, an eccentric unit disposed on the driving shaft and configured to rotate eccentrically about the axis of the driving shaft, and an output shaft received in the head housing and configured to oscillate about the axis of the output shaft. The output shaft is capable of installing and driving a working head. A fork is connected to the output shaft and configured to turn the rotating motion of the driving shaft to the oscillating motion of the output shaft by coordinating with the eccentric unit. The heading housing is operable to move relative to the body housing. The fork is configured to move relative to the eccentric unit and coordinate with the eccentric unit in different positions for different oscillating angles of the output shaft.

### SUMMARY

In one construction, the disclosure provides an oscillating power tool including a main body housing a motor. The oscillating power tool further includes a drive mechanism operatively coupled to the motor. The drive mechanism includes a shaft that is selectively driven in a first rotational direction and in a second rotational direction opposite the first rotational direction. The oscillating power tool further includes an output mechanism operatively coupled to the drive mechanism. The drive mechanism converts rotation of the shaft into oscillation of the output mechanism. The drive mechanism is operatively coupled to drive the output mechanism to provide a first degree of oscillation when the shaft is driven in the first rotational direction and operatively coupled to drive the output mechanism to provide a second degree of oscillation when the shaft is driven in the second rotational direction, the second degree of oscillation different from the first degree of oscillation. The invention is defined by the claims.

In another construction, the oscillating power tool includes a main body housing a motor. The oscillating power tool further includes a drive mechanism having a main shaft rotatable about a first axis and selectively rotatable in a first rotational direction and in a second rotational direction. An output mechanism is operatively coupled to the drive mechanism. The output mechanism is configured to oscillate. The drive mechanism converts rotation of the main shaft into oscillation of the output mechanism. The drive mechanism includes an eccentric member defining a second axis parallel to and offset from the first axis. The eccentric member is movable with respect to the main shaft between a first position having a first offset distance between the second axis and the first axis and a second position having a second offset distance between the second axis and the first axis, wherein the first offset distance is different from the second offset distance. The first offset distance corresponds to a first degree of oscillation of the output mechanism and the second offset distance corresponds to a second degree of oscillation of the output mechanism. The first degree of oscillation is different from the second degree of oscillation. The invention is defined by the claims.

In yet another construction, the disclosure provides a method of changing the degree of oscillation of an output shaft in a power tool having a motor and a drive mechanism configured to convert rotation of the motor into oscillation of the output shaft. The drive mechanism includes a fork for transferring motion from the drive mechanism to the output shaft and a main shaft configured to rotate about a first axis in a first direction and to rotate in a second direction opposite the first direction. The method includes providing an eccentric member operatively coupled to the main shaft and to the forked member and having a variable eccentricity to effectuate a change in the degree of oscillation of the output shaft of the power tool. The invention is defined by the claims.

Other aspects of the disclosure will become apparent by consideration of the detailed description and accompanying drawings.

### BRIEF DESCRIPTION OF THE DRAWINGS

FIG. 1 is a side view of a power tool having a head and a handle according to one construction of the invention.
FIG. 2 is a cross section of the head of FIG. 1 taken along line 2--2.
FIG. 3 is a perspective view of a drive mechanism portion of the power tool shown in FIG. 1.
FIG. 4 is an exploded view of a main shaft and a shaft tip of the drive mechanism of FIG. 3.
FIG. 5 is a perspective view of the main shaft and the shaft tip of FIG. 4.
FIG. 6 is a section view of the main shaft of FIG. 4 taken along line 6--6.
FIG. 7 is a perspective view of the shaft tip of FIG. 4.
FIG. 8 is a front view of the main shaft and the shaft tip of FIG. 5 when a motor of the power tool is rotating in a first direction.
FIG. 9 is a section view of the main shaft and the shaft tip of FIG. 5 taken along the line 9--9.
FIG. 10 is a front view of the main shaft and the shaft tip of FIG. 5 when a motor of the power tool is rotating in a second direction.
FIG. 11 is section view of the main shaft and the shaft tip of FIG. 5 taken along the line 11--11.

Before any embodiments or constructions of the disclosure are explained in detail, it is to be understood that the disclosure is not limited in its application to the details of construction and the arrangement of components set forth in the following description or illustrated in the following drawings. The disclosure is capable of other embodiments and constructions and of being practiced or of being carried out in various ways. Also, it should be understood that the phraseology and terminology used herein are for the purpose of description and should not be regarded as limiting.

### DETAILED DESCRIPTION

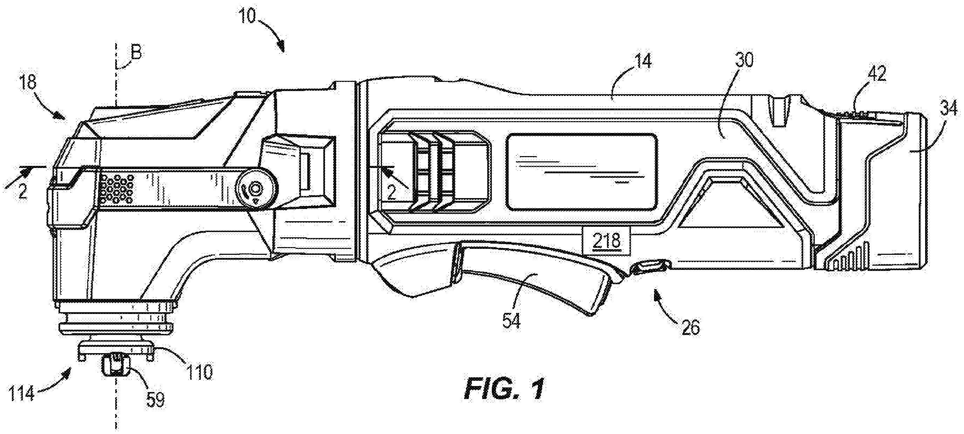

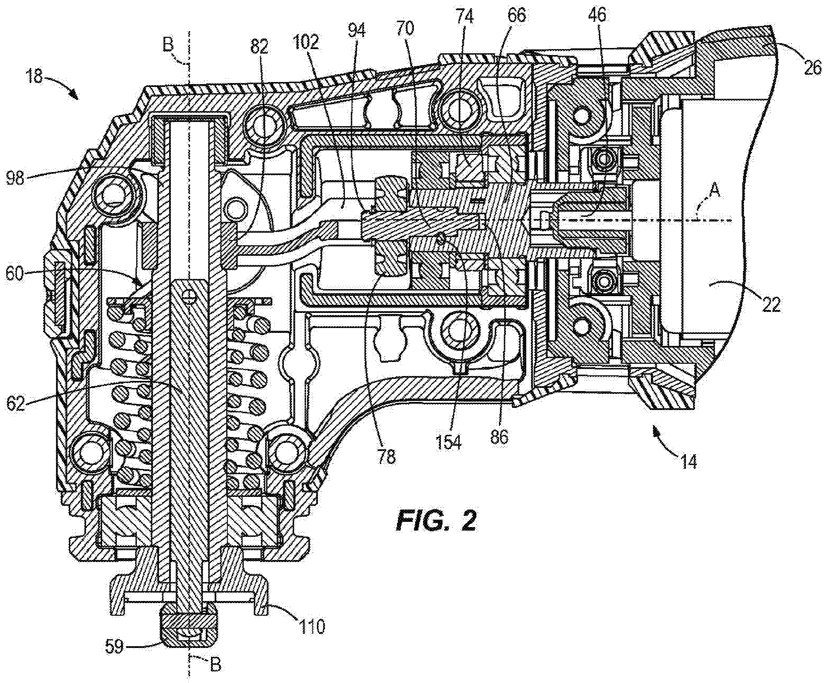

Figs. 1-3 illustrate a power tool 10 according to one construction of the invention. The power tool 10 includes a handle 14, or main body, and a head 18 coupled to the handle 14 that is driven by a motor 22 (FIG. 2) housed within the handle 14. In the illustrated construction, the head 18 is selectively attachable to and detachable from the handle 14; however, in other constructions, the power tool 10 may be a unitary power tool and "head" and "handle" may refer generally to the head portion and the handle portion, respectively, of the unitary power tool.

The head 18 is an oscillating head and the motor 22 in the illustrated construction is 12V-DC, 2.0 Amps no load current. The motor 22 includes a motor drive shaft 46 and is either a reversible/bidirectional motor, as shown in the illustrated construction, or in other constructions may be a single-direction motor engaged with a reversing drive (not shown) for selectively reversing the direction of rotation of the motor drive shaft 46. For example, the reversing drive (not shown) may include a reversing mechanism driven by the motor drive shaft 46 and an intermediate shaft driven by the reversing mechanism in a direction opposite the direction of the motor drive shaft 46. In other constructions, other suitable motors may be employed, such as an alternating current (AC) motor, a pneumatic motor, etc. In yet other constructions, a variable speed or multi-speed motor may be employed.

The handle 14 includes a housing 26 and a grip portion 30 providing a surface suitable for grasping by a user to operate the power tool 10. The housing 26 generally encloses the motor 22, which has a motor drive shaft 46 extending therefrom. A longitudinal axis A (FIG. 2) is defined by motor 22 and the motor drive shaft 46.

The power tool 10 includes a removable and rechargeable battery pack 34. In the illustrated construction, the battery pack 34 is a 12-volt battery pack and includes three (3) Lithium-ion battery cells. In other constructions, the battery pack may include fewer or more battery cells such that the battery pack is a 14.4-volt battery pack, an 18-volt battery pack, etc., or the like. Additionally or alternatively, the battery cells may have chemistries other than Lithium-ion such as, for example, Nickel Cadmium, Nickel Metal-Hydride, or the like. In other constructions, other suitable batteries and battery packs may be employed. In yet other constructions, the power tool 10 may include a power cord so that it may be powered by a remote source of power, such as a utility source of AC connected to the cord. In yet other constructions, the power tool 10 may be pneumatically powered or powered by any other suitable source.

The handle 14 also includes an actuator 54 (FIG. 1). The actuator 54 is coupled with the housing 26 and is actuatable to power the motor 22, e.g., to electrically couple the battery pack 34 and the motor 22 to run the motor 22. The actuator 54 may be a trigger-style actuator (as shown), a sliding actuator, a button, etc., or the like.

The head 18 includes a drive mechanism 58 for converting rotary motion of the motor drive shaft 46 into oscillating motion of an output mechanism 60. As shown in FIG. 2, the output mechanism 60 includes a hollow spindle 98 having an arbor 110 disposed at a distal end thereof, and a clamping shaft 62 disposed slidingly within the hollow spindle 98. The arbor 110 is configured to receive a blade or accessory, as will be described in greater detail below, and the clamping shaft 62 includes a clamping member 59 at a distal end thereof for clamping the blade or accessory to the arbor 110. The hollow spindle 98 and/or the clamping shaft 62 define a longitudinal axis B (e.g., an oscillation axis) substantially perpendicular to the axis A. As shown in FIG. 2, the drive mechanism 58 includes a main shaft 66, an eccentric member 70, a counter balance 74, a ball bearing eccentric member 78, and a forked member 82.

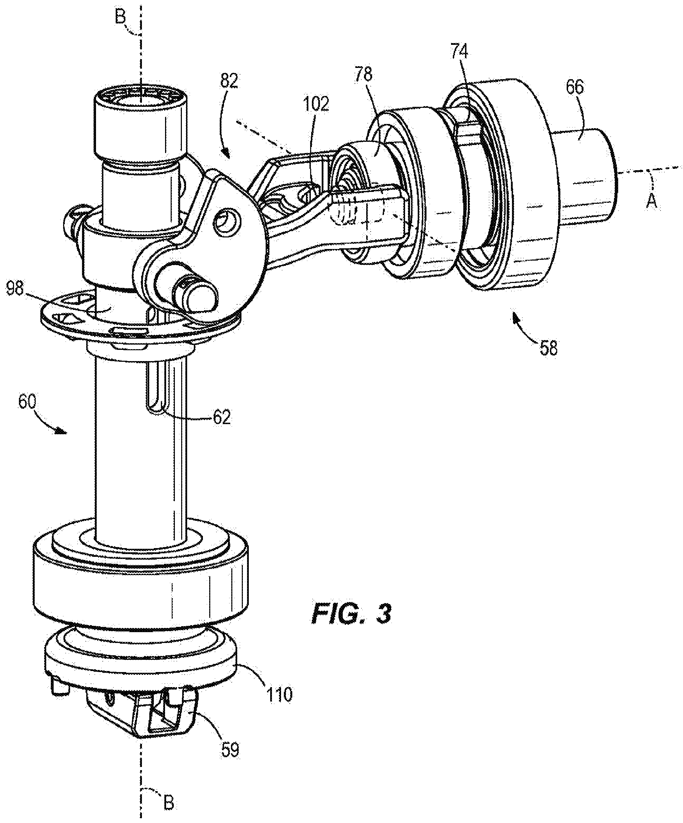

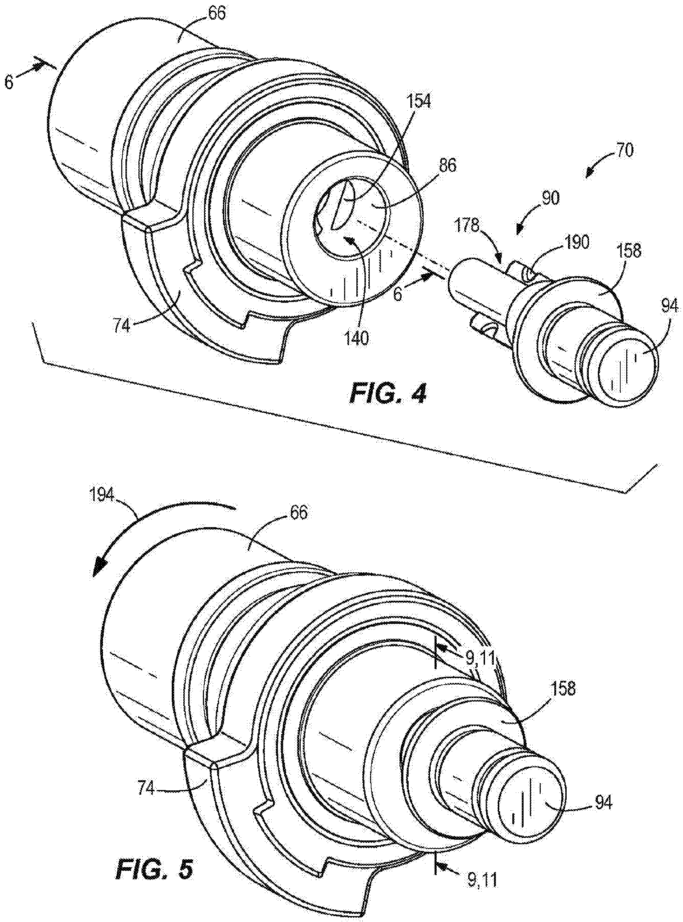

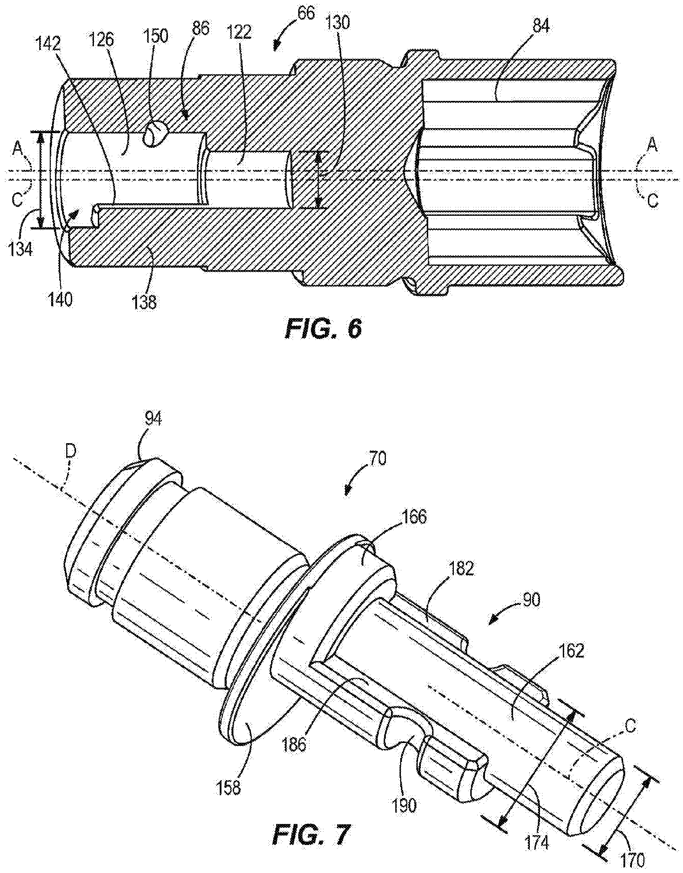

FIG. 3 illustrates the drive mechanism 58 and the output mechanism 60 in isolation, with the remainder of the power tool 10 removed from view. The main shaft 66 is aligned coaxially with the axis A and includes an eccentric bore 86 (FIG. 6) that is not centered about the axis A. Rather, the eccentric bore 86 defines an axis C that is parallel to and spaced or offset from the axis A, as shown in FIG. 6. A portion of the eccentric member 70 is received within the eccentric bore 86 of the main shaft 66, as is shown in FIG. 4 and will be described in greater detail below. The counter balance 74 is press fit on the main shaft 66, and the ball bearing eccentric member 78 is press fit on the shaft tip 94. The counter balance 74 counters the off-center rotation of the eccentric member 70 and the ball bearing eccentric member 78 to reduce vibrations caused by the eccentric rotation thereof.

The forked member 82 is coupled to the clamping shaft 62 by a sleeve 98 and includes two arms 102. The arms 102 are positioned adjacent generally opposite sides of the ball bearing eccentric member 78, and each arm 102 includes a contact portion 106 that engages an outer circumferential surface of the ball bearing eccentric member 78. As the ball bearing eccentric member 78 rotates and wobbles about the axis A, the ball bearing eccentric member 78 pushes each contact portion 106 in an alternating fashion to cause the forked member 82 to oscillate. Thus, the forked member 82 wobbles and oscillates about the axis B to convert the eccentric rotary motion of the ball bearing eccentric member 78 about the axis A into oscillating motion of the hollow spindle 98 about the axis B.

As shown in FIG. 2, the hollow spindle 98 terminates, at a free end, with the arbor 110. The arbor 110 includes a locating feature (not shown), such as a protrusion, sized and shaped for receiving a cutting accessory, such as a blade having an opening configured to mate with the locating feature. The arbor 110 cooperates with a clamping mechanism, such as the clamping shaft 59 for clamping the cutting accessory to the hollow spindle 98 for oscillating motion therewith.

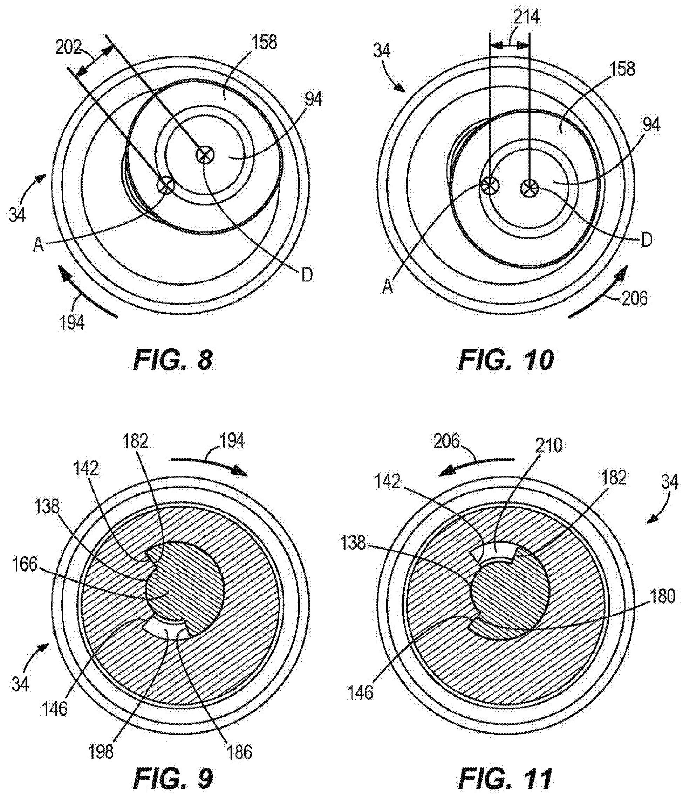

With reference to FIG. 6, the main shaft 66 includes a motor engagement bore 84 and the eccentric bore 86 positioned at opposing ends of the main shaft 66. The motor engagement bore 84 extends along and is centered with respect to the axis A. The motor engagement bore 84 receives the motor drive shaft 46 so that the main shaft 66 rotates with the motor drive shaft 46. The eccentric bore 86 extends along the longitudinal axis C and includes a first portion 122, and a second portion 126. The first portion 122 has a first diameter 130 and is centered about the longitudinal axis C. The second portion 126 is positioned outward of the first portion 122 and has a second diameter 134 larger than the first diameter 130. The second portion 126 is centered about the axis C. The second portion 126 includes a protrusion 138 (also shown in cross section in Figs. 9 and 11) that extends inwardly along a portion of a perimeter of the second portion 126 and protrudes into the eccentric bore 86. The protrusion 138 extends between a first driving surface 142 and a second driving surface 146, as shown in Figs. 9 and 11, and is spaced inwardly of an opening 140 of the eccentric bore 86. In the illustrated construction, the protrusion 138 defines a wall of the first portion 122 of the eccentric bore 86. The protrusion 138 has a length that is shorter than a perimeter of the second portion 126. In the illustrated embodiment, the protrusion 138 has a length that is shorter than half of the perimeter of the second portion 126. The second portion 126 includes a through opening 150 that is substantially perpendicular to the axis C. The through opening 150 is sized to receive a pin 154.

As shown in FIG. 7, the eccentric member 70 includes a shaft post 90, a connection portion 158, and the shaft tip 94. The shaft post 90 is centered with respect to the axis C and the shaft tip 94 defines an axis D. The axis C and the axis D are parallel to the axis A. The shaft post 90 and the connection portion 158 are centered with respect to the axis C and are eccentric with respect to the axis A. The shaft tip 94 is centered with respect to the axis D, and eccentric with respect to the axis C and the axis A. Therefore, the shaft tip 94 is eccentric with respect to shaft post 90 and the connection portion 158.

With continued reference to FIG. 7, the shaft post 90 includes a first shaft post 162, and a second shaft post 166. The first shaft post 162 has a first diameter 170. The first shaft post 162 is centered about the axis C and spaced from the axis A. The second shaft post 166 has a second diameter 174 larger than the first diameter 170. The second shaft post 166 is positioned proximate and spaced from the connection portion 158. The second shaft post 166 includes a cutout 178 (FIG. 4) that extends between a first driven surface 182 and a second driven surface 186. The cutout 178 has a perimeter that is shorter than a perimeter of the second shaft post 166.

With reference to FIG. 2, the shaft post 90 is sized to be received by the eccentric bore of the main shaft 43. When the eccentric member 70 is positioned within the eccentric bore 86, the shaft tip 94 is eccentric with respect to the axis A. The second shaft post 166 is positioned within the second portion 126 of the eccentric bore 86 of the main shaft 66 so that the first driven surface 182 and the second driven surface 186 may engage the first driving surface 142 and the second driving surface 146, respectively. A combined perimeter of the protrusion 138 of the eccentric member 70 and the cutout 178 of the eccentric bore 86 is smaller than a perimeter of the eccentric bore 86 so that the eccentric member 70 is rotatable within the eccentric bore 86. A track 190 sized to receive the pin 154 extends along a perimeter of the inwardly extending cutout 178. As shown in FIG. 2, when the pin 154 is engaged with the track 190 and passes through the opening 150 of the main shaft 66, the pin 154 restricts movement of the eccentric member 70 along the axis C while allowing the eccentric member 70 to rotate freely about the axis C.

FIG. 9 shows a cross-section of the second portion 126 of the main shaft 66 and the second shaft post 90 of the eccentric member 70 when the motor drive shaft 46 is rotating in a direction shown by an arrow 194, which may correspond to reverse rotation of the motor drive shaft 46. Rotation of the main shaft 66 causes the first driving surface 142 of the main shaft 66 to engage the first driven surface 182 of the eccentric member 70 so that the shaft tip 94 of the eccentric member 70 rotates away from the axis A. A gap 210 is formed between the second driving surface 146 and the second driven surface 186 when the first driving surface 142 is engaged with the first driven surface 182. As shown in FIG. 8, a center 212 of the shaft tip 94 is spaced a first eccentric offset distance 202 from the axis A. The first eccentric offset distance 202 causes the clamping shaft 62 to oscillate in a first degree of oscillation. In the illustrated construction, the first eccentric offset distance 202 is approximately 1.97 mm and corresponds to approximately 6 degrees of oscillation of the clamping shaft 62.

FIG. 11 shows a cross-section of the second portion 126 of the main shaft 66 and the second shaft post 166 of the eccentric member 70 when the motor drive shaft 46 is rotating in a direction shown by an arrow 206, which may correspond to forward rotation of the motor drive shaft 46. Rotation of the main shaft 66 causes the second driving surface 146 of the main shaft 66 to engage the second driven surface 186 of the eccentric member 70 so that the shaft tip 94 of the eccentric member 70 rotates toward the axis A. A gap 198 is formed between the first driving surface 142 and the first driven surface 182 when the second driving surface 146 is engaged with the first driven surface 186. As shown in FIG. 10, the center 212 of the eccentric member 70 is spaced a second eccentric offset distance 214 from the axis A. The second eccentric offset distance 214 causes the clamping shaft 62 to oscillate in a second degree of oscillation. In the illustrated construction, the second eccentric offset distance 214 is approximately 1.11 mm and corresponds to approximately 4 degrees of oscillation of the clamping shaft 62.

In the illustrated construction, the first eccentric offset distance 202 is larger than the second eccentric offset distance 214, meaning that the first degree of oscillation is larger than the second degree of oscillation. In the illustrated construction, the larger degree of oscillation occurs when the motor is operating in the reverse direction and the smaller degree of oscillation occurs when the motor is operating in the forward direction. In other constructions, the first eccentric distance 202 may be smaller than the second eccentric distance 214. Accordingly, the larger degree of oscillation may occur when the motor operates in the forward direction and the smaller degree of oscillation may occur when the motor is operating in the reverse direction. In alternate constructions, the size of the first offset distance and the second offset distance may be varied (e.g., by altering the dimensions of the protrusion 138 of the eccentric bore 86 and the cutout 178 of the eccentric member 70) to effectuate other degrees of oscillation as desired.

As discussed above, the ball bearing eccentric member 78 is secured to the shaft tip 94. As the eccentric member 70 is rotated by the main shaft 66, the ball bearing eccentric member 78 wobbles about the axis A. The eccentric member 78 pushes each contact portion 106 of the forked member 82 in an alternating fashion to cause the forked member 82 to reciprocate. The forked member 82 reciprocates about the axis B and, in turn, transfers oscillating motion to the hollow spindle 98. When a center 92 of the shaft tip 94 is relatively far from the axis A (e.g., for relatively large eccentric distances), the ball bearing eccentric member 78 wobbles more than it does when the shaft tip 94 is relatively close to the axis A. A greater amount of wobble of the ball bearing eccentric member 78 corresponds to a greater degree of oscillation of the hollow spindle 98 about the axis B. Accordingly, an operator may change the degree of oscillation of the power tool 10 by changing the operating direction of the motor 22 or, alternatively, by engaging the reversing drive (not shown) to convert the rotation of the motor drive shaft 46 into rotation of the intermediate shaft (not shown) in an opposite direction of the motor drive shaft 46.

The oscillating tool 10 includes a switch 218 (FIG. 1) configured to change the degree of oscillation between the first degree of oscillation and the second degree of oscillation. The switch 218 may be integrated with the actuator 54 or separate from the actuator 54. As shown in FIG. 1, the switch 218 may be a separate switch movable between two positions (by rotating, sliding, pushing, etc.). A first position of the switch designates a first direction of rotation of the main shaft 66 (e.g., clockwise) and a second position designates a second degree of rotation (e.g., an opposite direction, such as counterclockwise). Then, when the operator actuates the actuator 54, the main shaft 66 rotates in the direction corresponding to the position of the switch 218 and the output mechanism 60 oscillates at the angle corresponding with the direction of rotation of the main shaft 66. In other constructions, the switch could be integrated with the actuator 54. For example, the actuator 54 may be movable between a first position corresponding to the first oscillation angle, and a second position corresponding to the second oscillation angle, and a third position corresponding to the motor off.

In operation, an operator actuates the switch 218 to select a larger degree of oscillation or a smaller degree of oscillation. The user then depresses the switch trigger 54 to engage the motor 22. If the operator has chosen the larger degree of oscillation, the motor 22 is actuated in the direction corresponding to the larger eccentric distance. If the operator has chosen the smaller degree of oscillation, the motor 22 is actuated in the direction corresponding to the smaller eccentric distance.

For example, in the illustrated construction, if the operator selects the larger degree of oscillation, the motor 22 operates in the first direction 194. The main shaft 66 rotates about the axis A in the first direction 194. Rotation of the main shaft 66 in the first direction 194 causes the first driving surface 142 of the eccentric bore 86 of the main shaft 66 to engage the first driven surface 182 of the eccentric member 70. Once the first driving surface 142 of the main shaft 66 is engaged with the first driven surface 182 of the eccentric member 70, the center 212 of the tip 94 of the eccentric member 70 is spaced the first eccentric distance 202 from the axis A. The ball bearing eccentric member 78 engaged with the tip 94 of the eccentric member 70 will push the arms 102 of the forked member 82 a first amount corresponding to the first eccentric distance 202, causing the clamping shaft 62 shaft to oscillate with the first degree of oscillation.

If the operator selects the smaller degree of oscillation, the motor operates in the second direction 206. The main shaft 66 rotates about the axis A in the second direction 206. By inertia, rotation of the main shaft 66 in the second direction 206 causes the second driving surface 146 of the eccentric bore 86 of the main shaft 66 to engage the second driven surface 186 of the eccentric member 70. Once the second driving surface 146 of the main shaft 66 is engaged with the second driven surface 186 of the eccentric member 70, the center 212 of the tip 94 of the eccentric member 70 is spaced the second eccentric distance 214 from the axis A. The ball bearing eccentric member 78 engaged with the tip 94 of the eccentric member 70 will push the arm of the forked member 82 a second amount corresponding to the second eccentric distance 214, causing the clamping shaft 62 to oscillate with the second degree of oscillation. Thus, the drive mechanism 58 includes an eccentric portion (e.g., the eccentric member 70) having a first amount of eccentricity with respect to the axis A when the main shaft 66 is driven in the first rotational direction and a second amount of eccentricity with respect to the axis A when the main shaft 66 is driven in the second rotational direction.

Thus, the invention provides an eccentric member 70 having a variable eccentricity to effectuate a change in the degree of oscillation of the output shaft (e.g., the hollow spindle 98) of the power tool 10. Changing the direction of rotation of the eccentric member 70 moves the eccentric member 70 to a different position having a different eccentricity. Thus, the invention provides a drive mechanism 58 operatively coupled to drive the output mechanism 60 at a first degree of oscillation when the main shaft 66 is driven in the first rotational direction and operatively coupled to drive the output mechanism 60 at a second degree of oscillation different from the first degree of oscillation when the main shaft 66 is driven in the second rotational direction. Various features and advantages of the disclosure are set forth in the following claims.

## Claims

1. An oscillating power tool (10) comprising:
a main body (14) housing a motor (22);
a drive mechanism (58) having a main shaft (66) configured to selectively rotate in a first rotational direction and in a second rotational direction, the main shaft rotatable about a first axis (A); and
an output mechanism (60) operatively coupled to the drive mechanism, the output mechanism configured to oscillate, wherein the drive mechanism converts rotation of the main shaft into oscillation of the output mechanism;
wherein the drive mechanism includes an eccentric member (70) defining a second axis (D) parallel to and offset from the first axis, the eccentric member movable with respect to the main shaft between a first position having a first offset distance (202) between the second axis and the first axis and a second position having a second offset distance (214) between the second axis and the first axis, wherein the first offset distance is different from the second offset distance, and wherein the first offset distance corresponds to a first degree of oscillation of the output mechanism and the second offset distance corresponds to a second degree of oscillation of the output mechanism, wherein the first degree of oscillation is different from the second degree of oscillation; and
**characterized in that** the main shaft includes a bore (86) receiving the eccentric member, wherein the bore defines a third axis (C) offset from the first axis, wherein the eccentric member is rotatable within the bore between the first position and the second position, and wherein the eccentric member includes an offset tip (94) centered about the second axis, the offset tip being offset from the third axis.

2. The oscillating power tool of claim 1, wherein the drive mechanism (58) further includes a forked member (82) operatively coupled between the eccentric member (70) and the output mechanism (60) to convert wobbling of the eccentric member into the oscillation of the output mechanism.

3. The oscillating power tool of claim 1, wherein the eccentric member (70) is rotatable between the first position and the second position.

4. The oscillating power tool of claim 1, wherein the eccentric member (70) includes a post (90) received in the main shaft (66) and an offset tip (94) that is offset from the post.

5. The oscillating power tool of claim 1, wherein the main shaft (66) includes a bore (86) receiving the eccentric member (70), wherein the main shaft includes a protrusion (138) into the bore, the protrusion having a first driving surface (142), the eccentric member having a first driven surface (182), and wherein the first driving surface is engaged with the first driven surface when the main shaft is rotated in the first rotational direction.

6. The oscillating power tool of claim 5, wherein the protrusion (138) further includes a second driving surface (146) and the eccentric member (70) further includes a second driven surface (186), and wherein the second driving surface is engaged with the second driven surface when the main shaft (66) is rotated in the second direction;
and, optionally
wherein the first driving surface (142) is engaged with the first driven surface (182) when the shaft (66) is rotated in the first rotational direction and the second driving surface (146) is engaged with the second driven surface (186) when the shaft (66) is rotated in the second rotational direction.

7. An oscillating power tool of claim 1, wherein the drive mechanism (58) is operatively coupled to drive the output mechanism (60) to provide a first degree of oscillation when the shaft (66) is driven in the first rotational direction and operatively coupled to drive the output mechanism to provide a second degree of oscillation when the shaft is driven in the second rotational direction, the second degree of oscillation different from the first degree of oscillation.

8. The oscillating power tool of claim 7, wherein the eccentric member (70) has a first amount of eccentricity with respect to the first axis (A) when the shaft (66) is driven in the first rotational direction and a second amount of eccentricity with respect to the first axis when the shaft is driven in the second rotational direction, wherein the first amount of eccentricity is different from the second amount of eccentricity.

9. The oscillating power tool of claim 8, wherein the eccentric member (70) includes a post (90) at least partially disposed within the bore (86) of the shaft (66), wherein the eccentric member is movable between a first position having the first amount of eccentricity and a second position having the second amount of eccentricity.

10. The oscillating power tool of claim 9, wherein the eccentric member (70) is rotatable between the first position and the second position.

11. The oscillating power tool of claim 9, wherein the shaft (66) includes a protrusion (138) extending into the bore (86) having a first driving surface (142) and a second driving surface (146), and the post (90) includes a first driven surface (182) and a second driven surface (186), and wherein the first driving surface is drivingly engaged with the first driven surface when the shaft is rotated in the first rotational direction and the second driving surface is drivingly engaged with the second driven surface when the shaft is rotated in the second rotational direction;
and, optionally
wherein a gap (210) is defined between the second driving surface (146) and the second driven surface (186) when the shaft (66) is rotated in the first rotational direction and a gap (198) is defined between the first driving surface (142) and the first driven surface (182) when the shaft is rotated in the second rotational direction.

12. The oscillating power tool of claim 7:
(a) further comprising a switch (218) actuatable by a user to effectuate a change between the first rotational direction and the second rotational direction to change the degree of oscillation;
or
(b) wherein the motor (22) is reversible to selectively drive the shaft (66) in the first rotational direction or the second rotational direction;
or
(c) further comprising a reversing mechanism operatively disposed between the motor (22) and the shaft (66) to selectively change the direction of rotation of the shaft.

13. A method of changing the degree of oscillation of an output mechanism (60) in a power tool (10) having a motor (22) and a drive mechanism (58),
wherein the drive mechanism (58) has a main shaft (66),
the output mechanism (60) is operatively coupled to the drive mechanism,
the drive mechanism includes an eccentric member (70) defining a second axis (D) parallel to and offset from the first axis, the eccentric member movable with respect to the main shaft between a first position having a first offset distance (202) between the second axis and the first axis and a second position having a second offset distance (214) between the second axis and the first axis, wherein the first offset distance is different from the second offset distance, and wherein the first offset distance corresponds to a first degree of oscillation of the output mechanism and the second offset distance corresponds to a second degree of oscillation of the output mechanism, wherein the first degree of oscillation is different from the second degree of oscillation; and
**characterized in that** the main shaft includes a bore (86) receiving the eccentric member, wherein the bore defines a third axis (C) offset from the first axis, and wherein the eccentric member includes an offset tip (94) centered about the second axis, the offset tip being offset from the third axis;
the method comprising:
selectively rotating the main shaft in a first rotational direction and in a second rotational direction such that the main shaft rotates about a first axis (A);
the drive mechanism converting rotation of the main shaft into oscillation of the output mechanism; and
rotating the eccentric member within the bore between the first position and the second position.

## Patentansprüche

1. Oszillierendes Elektrowerkzeug (10), umfassend:
einen Hauptkörper (14), der einen Motor (22) beherbergt;
einen Antriebsmechanismus (58) mit einer Hauptwelle (66), die ausgestaltet ist, sich selektiv in einer ersten Drehrichtung und in einer zweiten Drehrichtung zu drehen, wobei die Hauptwelle um eine erste Achse (A) drehbar ist; und
einen Ausgabemechanismus (60), der betriebsfähig mit dem Antriebsmechanismus gekoppelt ist, wobei der Ausgabemechanismus ausgestaltet ist zu oszillieren, wobei der Antriebsmechanismus eine Drehung der Hauptwelle in eine Oszillation des Ausgabemechanismus umwandelt;
wobei der Antriebsmechanismus ein exzentrisches Element (70) einschließt, das eine zweite Achse (D) parallel zu und versetzt von der ersten Achse definiert, wobei das exzentrische Element in Bezug auf die Hauptwelle zwischen einer ersten Position mit einem ersten Versatzabstand (202) zwischen der zweiten Achse und der ersten Achse und einer zweiten Position mit einem zweiten Versatzabstand (214) zwischen der zweiten Achse und der ersten Achse beweglich ist, wobei sich der erste Versatzabstand von dem zweiten Versatzabstand unterscheidet und wobei der erste Versatzabstand einem ersten Oszillationsgrad des Ausgabemechanismus entspricht und der zweite Versatzabstand einem zweiten Oszillationsgrad des Ausgabemechanismus entspricht, wobei sich der erste Oszillationsgrad von dem zweiten Oszillationsgrad unterscheidet; und
**dadurch gekennzeichnet, dass** die Hauptwelle eine Bohrung (86) einschließt, die das exzentrische Element aufnimmt, wobei
die Bohrung eine dritte Achse (C) definiert, die von der ersten Achse versetzt ist, wobei das exzentrische Element innerhalb der Bohrung zwischen der ersten Position und der zweiten Position drehbar ist, und wobei das exzentrische Element eine versetzte Spitze (94) einschließt, die um die zweite Achse zentriert ist, wobei die versetzte Spitze von der dritten Achse versetzt ist.

2. Oszillierendes Elektrowerkzeug nach Anspruch 1, wobei der Antriebsmechanismus (58) ferner ein gegabeltes Element (82) einschließt, das betriebsfähig zwischen dem exzentrischen Element (70) und dem Ausgabemechanismus (60) gekoppelt ist, um ein Taumeln des exzentrischen Elements in die Oszillation des Ausgabemechanismus umzuwandeln.

3. Oszillierendes Elektrowerkzeug nach Anspruch 1, wobei das exzentrische Element (70) zwischen der ersten Position und der zweiten Position drehbar ist.

4. Oszillierendes Elektrowerkzeug nach Anspruch 1, wobei das exzentrische Element (70) eine Säule (90), die in der Hauptwelle (66) aufgenommen ist, und eine versetzte Spitze (94), die von der Säule versetzt ist, einschließt.

5. Oszillierendes Elektrowerkzeug nach Anspruch 1, wobei die Hauptwelle (66) eine Bohrung (86) einschließt, die das exzentrische Element (70) aufnimmt, wobei die Hauptwelle einen Vorsprung (138) in die Bohrung einschließt, wobei der Vorsprung eine erste Antriebsfläche (142) aufweist, wobei das exzentrische Element eine erste angetriebene Fläche (182) aufweist, und wobei die erste Antriebsfläche mit der ersten angetriebenen Fläche in Eingriff steht, wenn die Hauptwelle in der ersten Drehrichtung gedreht wird.

6. Oszillierendes Elektrowerkzeug nach Anspruch 5, wobei der Vorsprung (138) ferner eine zweite Antriebsfläche (146) einschließt und das exzentrische Element (70) ferner eine zweite angetriebene Fläche (186) einschließt, und wobei die zweite Antriebsfläche mit der zweiten angetriebenen Fläche in Eingriff steht, wenn die Hauptwelle (66) in die zweite Richtung gedreht wird;
und wahlweise
wobei die erste Antriebsfläche (142) mit der ersten angetriebenen Fläche (182) in Eingriff steht, wenn die Welle (66) in der ersten Drehrichtung gedreht wird, und die zweite Antriebsfläche (146) mit der zweiten angetriebenen Fläche (186) in Eingriff steht, wenn die Welle (66) in der zweiten Drehrichtung gedreht wird.

7. Oszillierendes Elektrowerkzeug nach Anspruch 1, wobei der Antriebsmechanismus (58) betriebsfähig gekoppelt ist, um den Ausgabemechanismus (60) anzutreiben, um einen ersten Oszillationsgrad bereitzustellen, wenn die Welle (66) in der ersten Drehrichtung angetrieben wird, und betriebsfähig gekoppelt ist, um den Ausgabemechanismus anzutreiben, um einen zweiten Oszillationsgrad bereitzustellen, wenn die Welle in der zweiten Drehrichtung angetrieben wird, wobei sich der zweite Oszillationsgrad von dem ersten Oszillationsgrad unterscheidet.

8. Oszillierendes Elektrowerkzeug nach Anspruch 7, wobei das exzentrische Element (70) einen ersten Exzentrizitätsbetrag in Bezug auf die erste Achse (A) aufweist, wenn die Welle (66) in der ersten Drehrichtung angetrieben wird, und einen zweiten Exzentrizitätsbetrag in Bezug auf die erste Achse aufweist, wenn die Welle in der zweiten Drehrichtung angetrieben wird, wobei sich der erste Betrag der Exzentrizität von dem zweiten Betrag der Exzentrizität unterscheidet.

9. Oszillierendes Elektrowerkzeug nach Anspruch 8, wobei das exzentrische Element (70) eine Säule (90) einschließt, die zumindest teilweise innerhalb der Bohrung (86) der Welle (66) angeordnet ist, wobei das exzentrische Element zwischen einer ersten Position mit dem ersten Ausmaß an Exzentrizität und einer zweiten Position mit dem zweiten Ausmaß an Exzentrizität beweglich ist.

10. Oszillierendes Elektrowerkzeug nach Anspruch 9, wobei das exzentrische Element (70) zwischen der ersten Position und der zweiten Position drehbar ist.

11. Oszillierendes Elektrowerkzeug nach Anspruch 9, wobei die Welle (66) einen Vorsprung (138) einschließt, der sich in die Bohrung (86) erstreckt und eine erste Antriebsfläche (142) und eine zweite Antriebsfläche (146) aufweist, und die Säule (90) eine erste angetriebene Fläche (182) und eine zweite angetriebene Fläche (186) einschließt, und wobei die erste Antriebsfläche antriebsmäßig mit der ersten angetriebenen Fläche in Eingriff steht, wenn die Welle in der ersten Drehrichtung gedreht wird, und die zweite Antriebsfläche antriebsmäßig mit der zweiten angetriebenen Fläche in Eingriff steht, wenn die Welle in der zweiten Drehrichtung gedreht wird;
und wahlweise
wobei ein Spalt (210) zwischen der zweiten Antriebsfläche (146) und der zweiten angetriebenen Fläche (186) definiert ist, wenn die Welle (66) in der ersten Drehrichtung gedreht wird, und ein Spalt (198) zwischen der ersten Antriebsfläche (142) und der ersten angetriebenen Fläche (182) definiert ist, wenn die Welle in der zweiten Drehrichtung gedreht wird.

12. Oszillierendes Elektrowerkzeug nach Anspruch 7:
(a) ferner umfassend einen Schalter (218), der von einem Benutzer betätigt werden kann, um eine Änderung zwischen der ersten Drehrichtung und der zweiten Drehrichtung zu bewirken, um den Oszillationsgrad zu ändern;
oder
(b) wobei der Motor (22) umkehrbar ist, um die Welle (66) selektiv in der ersten Drehrichtung oder der zweiten Drehrichtung anzutreiben;
oder
(c) ferner umfassend einen Umkehrmechanismus, der betriebsfähig zwischen dem Motor (22) und der Welle (66) angeordnet ist, um die Drehrichtung der Welle selektiv zu ändern.

13. Verfahren zum Ändern des Oszillationsgrades eines Ausgabemechanismus (60) in einem Elektrowerkzeug (10) mit einem Motor (22) und einem Antriebsmechanismus (58),
wobei der Antriebsmechanismus (58) eine Hauptwelle (66) aufweist,
der Ausgabemechanismus (60) betriebsfähig mit dem Antriebsmechanismus gekoppelt ist,
wobei der Antriebsmechanismus ein exzentrisches Element (70) einschließt, das eine zweite Achse (D) parallel zu und versetzt von der ersten Achse definiert, wobei das exzentrische Element in Bezug auf die Hauptwelle zwischen einer ersten Position mit einem ersten Versatzabstand (202) zwischen der zweiten Achse und der ersten Achse und einer zweiten Position mit einem zweiten Versatzabstand (214) zwischen der zweiten Achse und der ersten Achse beweglich ist, wobei sich der erste Versatzabstand von dem zweiten Versatzabstand unterscheidet und wobei der erste Versatzabstand einem ersten Oszillationsgrad des Ausgabemechanismus entspricht und der zweite Versatzabstand einem zweiten Oszillationsgrad des Ausgabemechanismus entspricht, wobei sich der erste Oszillationsgrad von dem zweiten Oszillationsgrad unterscheidet; und
**dadurch gekennzeichnet, dass**
die Hauptwelle eine Bohrung (86) einschließt, die das exzentrische Element aufnimmt, wobei die Bohrung eine dritte Achse (C) definiert, die von der ersten Achse versetzt ist, und wobei das exzentrische Element eine versetzte Spitze (94) einschließt, die um die zweite Achse zentriert ist, wobei die versetzte Spitze von der dritten Achse versetzt ist;
wobei das Verfahren umfasst:
selektives Drehen der Hauptwelle in einer ersten Drehrichtung und in einer zweiten Drehrichtung, so dass sich die Hauptwelle um eine erste Achse (A) dreht;
wobei der Antriebsmechanismus eine Drehung der Hauptwelle in eine Oszillation des Ausgabemechanismus umwandelt; und
Drehen des exzentrischen Elements innerhalb der Bohrung zwischen der ersten Position und der zweiten Position.

## Revendications

1. Outil électrique oscillant (10) comprenant :
un corps principal (14) abritant un moteur (22) ;
un mécanisme d'entraînement (58) ayant un arbre principal (66) configuré pour tourner sélectivement dans un premier sens de rotation et dans un deuxième sens de rotation, l'arbre principal pouvant tourner autour d'un premier axe (A) ; et
un mécanisme de sortie (60) couplé de manière opérationnelle au mécanisme d'entraînement, le mécanisme de sortie configuré pour osciller, dans lequel le mécanisme d'entraînement convertit la rotation de l'arbre principal en oscillation du mécanisme de sortie ;
dans lequel le mécanisme d'entraînement inclut un élément excentrique (70) définissant un deuxième axe (D) parallèle et décalé relativement au premier axe, l'élément excentrique mobile par rapport à l'arbre principal entre une première position ayant une première distance de décalage (202) entre le deuxième axe et le premier axe et une deuxième position ayant une deuxième distance de décalage (214) entre le deuxième axe et le premier axe, dans lequel la première distance de décalage est différente de la deuxième distance de décalage, et dans lequel la première distance de décalage correspond à un premier degré d'oscillation du mécanisme de sortie et la deuxième distance de décalage correspond à un deuxième degré d'oscillation du mécanisme de sortie, dans lequel le premier degré d'oscillation est différent du deuxième degré d'oscillation ; et
**caractérisé en ce que** l'arbre principal inclut un alésage (86) recevant l'élément excentrique, dans lequel
l'alésage définit un troisième axe (C) décalé relativement au premier axe, dans lequel l'élément excentrique peut tourner à l'intérieur de l'alésage entre la première position et la deuxième position, et dans lequel l'élément excentrique inclut une pointe décalée (94) centrée autour du deuxième axe, la pointe décalée étant décalée relativement au troisième axe.

2. Outil électrique oscillant selon la revendication 1, dans lequel le mécanisme d'entraînement (58) inclut en outre un élément fourchu (82) couplé de manière opérationnelle entre l'élément excentrique (70) et le mécanisme de sortie (60) pour convertir la nutation de l'élément excentrique en l'oscillation du mécanisme de sortie.

3. Outil électrique oscillant selon la revendication 1, dans lequel l'élément excentrique (70) peut tourner entre la première position et la deuxième position.

4. Outil électrique oscillant selon la revendication 1, dans lequel l'élément excentrique (70) inclut une tige (90) reçue dans l'arbre principal (66) et une pointe décalée (94) qui est décalée relativement à la tige.

5. Outil électrique oscillant selon la revendication 1, dans lequel l'arbre principal (66) inclut un alésage (86) recevant l'élément excentrique (70), dans lequel l'arbre principal inclut une saillie (138) dans l'alésage, la saillie ayant une première surface d'entraînement (142), l'élément excentrique ayant une première surface entraînée (182), et dans lequel la première surface d'entraînement est en prise avec la première surface entraînée lorsque l'arbre principal est tourné dans le premier sens de rotation.

6. Outil électrique oscillant selon la revendication 5, dans lequel la saillie (138) inclut en outre une deuxième surface d'entraînement (146) et l'élément excentrique (70) inclut en outre une deuxième surface entraînée (186), et dans lequel la deuxième surface d'entraînement est en prise avec la deuxième surface entraînée lorsque l'arbre principal (66) est tourné dans le deuxième sens ;
et, éventuellement
dans lequel la première surface d'entraînement (142) est en prise avec la première surface entraînée (182) lorsque l'arbre (66) est tourné dans le premier sens de rotation et la deuxième surface d'entraînement (146) est en prise avec la deuxième surface entraînée (186) lorsque l'arbre (66) est tourné dans le deuxième sens de rotation.

7. Outil électrique oscillant selon la revendication 1, dans lequel le mécanisme d'entraînement (58) est couplé de manière opérationnelle pour entraîner le mécanisme de sortie (60) pour fournir un premier degré d'oscillation lorsque l'arbre (66) est entraîné dans le premier sens de rotation et est couplé de manière opérationnelle pour entraîner le mécanisme de sortie pour fournir un deuxième degré d'oscillation lorsque l'arbre est entraîné dans le deuxième sens de rotation, le deuxième degré d'oscillation différent du premier degré d'oscillation.

8. Outil électrique oscillant selon la revendication 7, dans lequel l'élément excentrique (70) a une première quantité d'excentricité par rapport au premier axe (A) lorsque l'arbre (66) est entraîné dans le premier sens de rotation et une deuxième quantité d'excentricité par rapport au premier axe lorsque l'arbre est entraîné dans le deuxième sens de rotation, dans lequel la première quantité d'excentricité est différente de la deuxième quantité d'excentricité.

9. Outil électrique oscillant selon la revendication 8, dans lequel l'élément excentrique (70) inclut une tige (90) disposée au moins partiellement à l'intérieur de l'alésage (86) de l'arbre (66), dans lequel l'élément excentrique est mobile entre une première position ayant la première quantité d'excentricité et une deuxième position ayant la deuxième quantité d'excentricité.

10. Outil électrique oscillant selon la revendication 9, dans lequel l'élément excentrique (70) peut tourner entre la première position et la deuxième position.

11. Outil électrique oscillant selon la revendication 9, dans lequel l'arbre (66) inclut une saillie (138) s'étendant dans l'alésage (86) ayant une première surface d'entraînement (142) et une deuxième surface d'entraînement (146), et la tige (90) inclut une première surface entraînée (182) et une deuxième surface entraînée (186), et dans lequel la première surface d'entraînement est en prise par entraînement avec la première surface entraînée lorsque l'arbre est tourné dans le premier sens de rotation et la deuxième surface d'entraînement est en prise par entraînement avec la deuxième surface entraînée lorsque l'arbre est tourné dans le deuxième sens de rotation ;
et, éventuellement
dans lequel un espace (210) est défini entre la deuxième surface d'entraînement (146) et la deuxième surface entraînée (186) lorsque l'arbre (66) est tourné dans le premier sens de rotation et un espace (198) est défini entre la première surface d'entraînement (142) et la première surface entraînée (182) lorsque l'arbre est tourné dans le deuxième sens de rotation.

12. Outil électrique oscillant selon la revendication 7 :
(a) comprenant en outre un commutateur (218) actionnable par un utilisateur pour effectuer un changement entre le premier sens de rotation et le deuxième sens de rotation pour changer le degré d'oscillation ;
ou
(b) dans lequel le moteur (22) est réversible pour entraîner sélectivement l'arbre (66) dans le premier sens de rotation ou dans le deuxième sens de rotation ;
ou
(c) comprenant en outre un mécanisme d'inversion disposé de manière opérationnelle entre le moteur (22) et l'arbre (66) pour changer sélectivement le sens de rotation de l'arbre.

13. Procédé de changement du degré d'oscillation d'un mécanisme de sortie (60) dans un outil électrique (10) ayant un moteur (22) et un mécanisme d'entraînement (58),
dans lequel le mécanisme d'entraînement (58) a un arbre principal (66),
le mécanisme de sortie (60) est couplé de manière opérationnelle au mécanisme d'entraînement,
le mécanisme d'entraînement inclut un élément excentrique (70) définissant un deuxième axe (D) parallèle et décalé relativement au premier axe, l'élément excentrique mobile par rapport à l'arbre principal entre une première position ayant une première distance de décalage (202) entre le deuxième axe et le premier axe et une deuxième position ayant une deuxième distance de décalage (214) entre le deuxième axe et le premier axe, dans lequel la première distance de décalage est différente de la deuxième distance de décalage, et dans lequel la première distance de décalage correspond à un premier degré d'oscillation du mécanisme de sortie et la deuxième distance de décalage correspond à un deuxième degré d'oscillation du mécanisme de sortie, dans lequel le premier degré d'oscillation est différent du deuxième degré d'oscillation ; et
**caractérisé en ce que**
l'arbre principal inclut un alésage (86) recevant l'élément excentrique, dans lequel l'alésage définit un troisième axe (C) décalé relativement au premier axe, et dans lequel l'élément excentrique inclut une pointe décalée (94) centrée autour du deuxième axe, la pointe décalée étant décalée relativement au troisième axe ;
le procédé comprenant :
la rotation sélectivement de l'arbre principal dans un premier sens de rotation et dans un deuxième sens de rotation de telle sorte que l'arbre principal tourne autour d'un premier axe (A) ;
le mécanisme d'entraînement convertissant la rotation de l'arbre principal en oscillation du mécanisme de sortie ; et
la rotation de l'élément excentrique à l'intérieur de l'alésage entre la première position et la deuxième position.
